# EUROPÄISCHE PATENTANMELDUNG

(11) **EP 1 061 333 A1**
(43) Veröffentlichungstag der Anmeldung: **20.12.2000**
(21) Anmeldenummer: 00104000.5
(22) Anmeldetag: 25.02.2000
(51) Int. Cl.: G01B 17/00

(54) **Verfahren zur Abstandbestimmung unter Verwendung von Ultraschall und Ultraschallprüfkopf**

(30) Priorität: 09.03.1999 DE 19910377
(71) Anmelder: SIEMENS AKTIENGESELLSCHAFT, 80333 München (DE)
(72) Erfinder: Seydel, Orgent, Dr., 91336 Heroldsbach/Thurn (DE)

(57) **Zusammenfassung**

Bei einem Verfahren zum Bestimmen des in oberflächenparalleler Richtung (35) gemessenen Abstands (A) einer ersten Unstetigkeitskante (31) von einer zweiten Unstetigkeitskante (33) in einem Bauteil (1) werden die Unstetigkeitskanten (31, 33) mit Ultraschall (43) beschallt und durch Beugung an den Unstetigkeitskanten (31 bzw. 33) entstandene Ultraschallwellen (51 bzw. 53) empfangen. Die gemessenen Empfangszeitpunkte werden zur Bestimmung des Abstands (A) der Unstetigkeitskanten (31, 33) verwendet. Bevorzugt wird aus den Empfangszeitpunkten eine Anbindebreite (A) einer Schweißnaht (9) in einem aus einem Mutterrohr (3) und einem Sleeve-Rohr (5) zusammengesetzten Rohr (1A) ermittelt. Es sind auch Ultraschallprüfköpfe (61) zum Prüfen eines Bauteils (1) beschrieben.

## Beschreibung

Die Erfindung liegt auf dem Gebiet der zerstörungsfreien Prüf- und Meßtechnik.

Die Erfindung betrifft ein Verfahren zum Bestimmen des Abstands einer ersten Unstetigkeitskante in einem Bauteil, insbesondere einer ersten Hohlraumkante, von einer zweiten Unstetigkeitskante im Bauteil, insbesondere von einer zweiten Hohlraumkante, wobei der Abstand in einer zu einer Oberfläche des Bauteils parallelen oder nahezu parallelen Richtung unter Verwendung von Ultraschall gemessen wird.

Die Erfindung betrifft gleichfalls Ultraschallprüfköpfe zum Prüfen eines Bauteils, das insbesondere eine Schweißnaht aufweist.

Zur Beurteilung des Ergebnisses einer zerstörungsfreien Werkstoffprüfung an einem Werkstück oder Bauteil ist häufig neben der Information, ob überhaupt ein Riß vorhanden ist, auch eine Aussage über die Größe des Risses gewünscht.

Aus einem Fachartikel von M. G. Silk, British Journal of NDT, Januar 1979, Seiten 12 bis 15, ist es bekannt, zur Bestimmung der Größe eines Risses in einem Werkstück die an Unstetigkeitskanten des Risses, z.B. an den Rißenden, Rißspitzen oder Rißkanten, stattfindende Beugung einer eingeschallten Ultraschallwelle auszunutzen. Hierzu wird der Riß mit Ultraschall angeregt und es werden die von Rißspitzen oder Rißkanten ausgehenden, durch Beugung entstandenen Ultraschallwellen an einer Empfangsstelle detektiert. Die gebeugten Ultraschallwellen sind im wesentlichen ungerichtet, insbesondere bilden sie jeweils eine Zylinderwelle. Aus der Differenz der Empfangszeitpunkte der von unterschiedlichen Rißkanten ausgehenden gebeugten Ultraschallwellen kann auf die Tiefenausdehnung des Risses (Höhe, 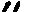 Rißtiefe") zurückgerechnet werden. Dieser Auswertung liegt zugrunde, daß die gesamten Laufzeiten des Ultraschalls jeweils von der Einkoppelstelle zu den unterschiedlichen, als Beugungszentren wirkenden Rißkanten und von dort weiter zur Empfangsstelle des Ultraschalls für unterschiedliche Rißkanten voneinander verschieden sind. Auf diese Weise wird die Tiefe eines sich im wesentlichen senkrecht zur Oberfläche eines Bauteils ausbreitenden Risses bestimmt.

Verfahren der beschriebenen Art waren am 23.07.1998 auch in einem Fachartikel von N. Trimborn unter der Internet-Adresse http://www.ndt.net/article/tofd/trimborn/trimborn.htm und ebenfalls am 23.07.1998 in einem Fachartikel von T. Just und G. Csapo unter der Internet-Adresse http://www.ndt.net/article/tofd/just/just.htm veröffentlicht. In diesen Quellen wird das Verfahren als 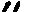 time of flight diffraction technique" oder als TOFD-Technik bezeichnet.

"Time-of-flight"-Verfahren sind außerdem beschrieben in GB 2198532 A und EP 0 595 573 A1.

Zur Reparatur oder Verstärkung der Wärmetauscherrohre eines Dampferzeugers eines thermischen, insbesondere eines nuklearen, Kraftwerks wird üblicherweise an einer schadhaften Stelle des als Mutterrohr bezeichneten Wärmetauscherrohrs ein Einsteckrohr, auch Sleeve-Rohr genannt, eingeführt und mit dem Mutterrohr verschweißt. Bei der Prüfung der Schweißnaht sind im wesentlichen zwei Qualitätsmerkmale von Bedeutung:
1) Die Anbindefläche (Aufschmelzfläche) darf keine Bindefehler enthalten.
2) Die minimal geforderte Breite der Anbindung (Anbindebreite, Schweißnahtbreite) zwischen dem Mutterrohr und dem Sleeve-Rohr muß eingehalten sein. Die Anbindebreite wird dabei parallel zur Oberfläche in Rohrrichtung gemessen.

Zur Bestimmung eines Abstands in einer zur Oberfläche eines Bauteils parallelen Richtung ist es bekannt, mit einem Ultraschallsender im Prüfbereich an der Oberfläche in der genannten Richtung entlang zu fahren und die Größe eines reflektierten Ultraschallsignals zu messen.

Zum Ausmessen eines Risses oder einer Schweißnaht ist ein derartiges Verfahren beispielsweise in dem Buch von Josef Krautkrämer und Herbert Krautkrämer mit dem Titel 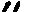 Werkstoffprüfung mit Ultraschall", Springer, 5. Auflage, 1986, auf Seite 349 bis 353, beschrieben. Während des Entlangfahrens an der Oberfläche wird das untersuchte Bauteil sukzessive abgetastet (Abtastverfahren) und aus dem Echo- oder Empfangssignal eine sogenannte Hüllkurve erzeugt. An den Stellen der Hüllkurve, an denen das Echo- oder Empfangssignal unter oder über einen bestimmten Grenzwert sinkt bzw. steigt, kann auf eine Unstetigkeitskante geschlossen werden.

Bei der Suche nach oberflächenparallelen Rissen werden auf diese Weise festgestellte Unstetigkeitskanten mit einer Rißkante oder -spitze identifiziert. Entsprechend kann die zwischen solchen Signaleinbrüchen bzw. -anstiegen zurückgelegte Wegstrecke als oberflächenparalleler ( 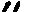 horizontaler") Abstand zwischen den Kanten eines Risses oder als 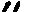 Rißlänge" interpretiert werden.

Bei der Schweißnahtprüfung werden üblicherweise die Flanken der Hüllkurve als Schweißnahtkante interpretiert. Die vom Ultraschallsender zwischen den Flankenstellen zurückgelegte Wegstrecke kann somit als horizontaler Abstand zwischen den Kanten der Schweißnaht interpretiert werden. Zusätzliche Signalspitzen oder -einbrüche in der Hüllkurve zeigen das Vorhandensein eines Risses in der Schweißnaht an.

Zur Auswertung, d.h. zur Identifikation einer Unstetigkeitskante, werden gewöhnlich die Stellen herangezogen, an denen das Empfangssignal auf 50% eines Plateau- oder Spitzenwerts abgefallen ist, weshalb diese Meßmethode auch als 6-dB-Methode bezeichnet wird. Die Ultraschallwelle kann dabei sowohl senkrecht als auch schräg unter V-Durchschallung eingeschallt werden.

Zur Schweißnaht-Breitenbestimmung ist es auch üblich, das Rückwandecho aus dem Mutter- und/oder Sleeve-Rohr zum Erzeugen einer Hüllkurve heranzuziehen.

Da bei der 6-dB-Methode die Größe des Empfangssignals im Rahmen der Hüllkurve zur Bestimmung des oberflächenparallelen Abstands beiträgt, liefert die 6-dB-Methode nur dann verläßliche und brauchbare Ergebnisse, falls die Oberfläche des zu prüfenden Bauteils, durch die der Ultraschall eingekoppelt und empfangen wird, von homogener und planer Qualität ist. Jede Art von Oberflächendeformation, wie sie beispielsweise im Bereich einer Schweißnaht entsteht, führt zu einer ungleichmäßigen Oberflächenreflexion und/oder -absorption und verfälscht deshalb die Hüllkurve und die daraus abgeleitete Schweißnahtbreite. Deshalb muß vor Anwendung der 6-dB-Methode die Oberfläche des Bauteils im Bereich der Schweißnaht in den meisten Fällen mechanisch bearbeitet werden.

Die Notwendigkeit zur mechanischen Bearbeitung ergibt sich insbesondere dann, falls eine Anordnung sowohl eines Ultraschallsenders als auch eines Ultraschallempfängers außerhalb der von der Schweißnaht beeinflußten Oberflächenzone nicht möglich ist, weil andernfalls der zur Bestimmung der Schweißnahtbreite erforderliche Verschiebeweg der Ultraschallwandler, d.h. des Ultraschallsenders und -empfängers, in Richtung des Abstands nicht ausreicht. Mit anderen Worten: Selbst bei der V-Durchschallung muß im Regelfall wenigstens einer der Ultraschallwandler in die von der Schweißnaht beeinflußte Oberflächenzone hineingefahren werden.

Ein weiterer Nachteil der beschriebenen 6-dB-Methode besteht darin, daß deren Genauigkeit durch den Bündeldurchmesser der eingekoppelten Ultraschallwelle begrenzt ist. Dies resultiert daher, daß der Bündeldurchmesser nicht durch Fokussieren beliebig klein gemacht werden kann und der Flankensteilheit der detektierten Hüllkurve deshalb enge Grenzen gesetzt sind.

Der Erfindung liegt demzufolge die Aufgabe zugrunde, ein Verfahren anzugeben, mit dem ein Abstand zwischen zwei Unstetigkeitskanten in einem Bauteil in im wesentlichen oberflächenparalleler Richtung genauer bestimmbar ist als mit der beschriebenen 6-dB-Methode. Insbesondere soll bei der Bestimmung einer Schweißnahtbreite eine aufwendige mechanische Bearbeitung des Prüfbereichs nicht notwendig sein.

Es ist ebenfalls Aufgabe der Erfindung, Ultraschallprüfköpfe anzugeben, mit denen ein solches Verfahren bevorzugt und besonders präzise durchführbar ist.

Die auf ein Verfahren bezogene Aufgabe wird bei dem Verfahren der eingangs genannten Art gemäß der Erfindung dadurch gelöst,
- daß die Unstetigkeitskanten mit Ultraschall beschallt werden, der an einer Einkoppelstelle durch die Oberfläche des Bauteils eingekoppelt wird,
- daß eine erste Ultraschallwelle und eine zweite Ultraschallwelle, die durch Beugung an der ersten Unstetigkeitskante bzw. an der zweiten Unstetigkeitskante von dem eingekoppelten Ultraschall angeregt sind, an einer Empfangsstelle empfangen werden, und
- daß die gemessenen Empfangszeitpunkte zur Bestimmung des Abstands der Unstetigkeitskanten verwendet werden.

Nach diesem Verfahren wird also das an sich bekannte TOFD-Verfahren zur Bestimmung eines oberflächenparallelen Abstands im Bauteil abgewandelt. Dabei wird ein Abstand bestimmt, der mit seiner größten Komponente parallel zur Oberfläche verläuft. Mit anderen Worten: Der Abstand kann auch bis zu einem Winkel von 45° schräg zur Oberfläche verlaufen. Vorzugsweise wird ein Abstand bestimmt, der nicht mehr als 10° schräg zur Oberfläche orientiert ist.

Das Verfahren nach der Erfindung hat den Vorteil, daß der oberflächenparallele Abstand genauer als mit den bisher bekannten Methoden gemessen wird, da das Meßergebnis weitgehend unabhängig vom Schallbündeldurchmesser und vom Reflexions- und Absorptionsverhalten der Oberfläche ist. Das Verfahren beruht nämlich nicht auf einer Amplituden-, sondern auf einer Laufzeitmessung.

Zur Bestimmung des Abstands werden beispielsweise die aus den unterschiedlichen Empfangszeitpunkten resultierenden unterschiedlichen Schall-Laufzeiten zwischen dem Einkoppeln und dem jeweiligen Empfang der Ultraschallwelle bestimmt. Bei bekannter Schallgeschwindigkeit im Bauteil können die unterschiedlichen Laufzeiten in unterschiedliche Laufwege umgerechnet werden, aus denen durch geometrische Überlegungen in an sich bekannter Weise der Abstand der Unstetigkeitskanten bestimmbar ist. Falls die Schallgeschwindigkeit im Bauteil nicht ausreichend genau bekannt ist, kann z.B. zusätzlich eine dritte Ultraschallwelle an der Empfangsstelle empfangen werden, die von der Einkoppelstelle durch Ausbreitung entlang der Oberfläche direkt zur Empfangsstelle gelangt. Bei bekanntem Abstand der Einkoppelstelle zur Empfangsstelle ist damit ebenfalls eine Umrechnung der gemessenen Empfangszeitpunkte in Laufwege möglich (Eichung).

Insbesondere wir die Empfangsstelle auf der gleichen Oberfläche wie die Einkoppelstelle gewählt.

Unter einer Unstetigkeitskante wird im Zusammenhang mit der Erfindung jede Kante bzw. Stelle verstanden, die auf einer Grenzfläche eines Teilbereichs des Bauteils gelegen ist, der sich in seinen akustischen Eigenschaften von der Umgebung des Teilbereichs und/oder von dem übrigen Bauteil unterscheidet (Inhomogenität). Der Teilbereich kann z.B. ein Material mit einem anderen Wellenwiderstand aufweisen oder ist durch einen Hohlraum, z.B. durch einen engen Spalt, gebildet. Die Unstetigkeitsstelle liegt - je nach Einschallrichtung - insbesondere auf einer Kante oder Spitze auf der Grenzfläche. Z.B. ist die Unstetigkeitskante durch eine Spaltspitze oder durch ein Ende eines dünnen Spalts gebildet.

Die Empfangsstelle wird bevorzugt an einer Position gewählt, an der weder ein transmittierter noch ein reflektierter Anteil des eingekoppelten Ultraschalls zu erwarten ist. An einer derart ausgewählten Position werden die von den durch Beugung angeregten Ultraschallwellen erzeugten Empfangssignale nicht von den im Regelfall größeren Empfangssignalen eines transmittierten oder reflektierten Anteils überlagert.

Falls die Lage möglicher Unstetigkeitskanten in etwa bekannt ist, werden die Einkoppel- und Empfangsstelle bevorzugt asymmetrisch bezüglich dieser erwarteten Lage(n) gewählt. Dadurch liefert das Verfahren ein besonders genaues Ergebnis.

Nach einer bevorzugten Ausgestaltung wird der Ultraschall nacheinander an unterschiedlichen Einkoppelstellen an der Oberfläche eingekoppelt und/oder die erste Ultraschallwelle sowie die zweite Ultraschallwelle nacheinander an unterschiedlichen Empfangsstellen empfangen, und es werden die bezüglich unterschiedlicher Einkoppelstellen bzw. Empfangsstellen gemessenen Empfangszeitpunkte zur Bestimmung des Abstands verwendet.

Bei dieser Vorgehensweise werden in vorteilhafter Weise mit Sicherheit auch solche Einkoppelstellen und Empfangsstellen geschaffen, die bezüglich des zu bestimmenden Abstands asymmetrisch angeordnet sind. Aus den so gemessenen Empfangszeitpunkten ist der Abstand mit besonders hoher Genauigkeit bestimmbar. Die genannte Vorgehensweise hat zudem den Vorteil, daß zu jeder der Unstetigkeitsstellen mehrere redundante Empfangszeitpunkte gemessen werden, wodurch die Meßgenauigkeit insgesamt gesteigert wird.

Die bezüglich unterschiedlicher Einkoppelstellen bzw. Empfangsstellen gemessenen Empfangszeitpunkte werden zur Bestimmung des Abstands der Unstetigkeitskanten bevorzugt statistisch ausgewertet.

Zur Ermittlung eines Abstandswerts wird beispielsweise eine statistische Approximation durchgeführt, wobei aus einer Vielzahl redundanter, aber mehr oder weniger fehlerbehafteter Meßwerte ein Näherungswert ermittelt wird.

Beim Einkoppeln bzw. Empfang von Ultraschall an nacheinander unterschiedlichen Einkoppel- bzw. Empfangsstellen wird insbesondere ein konstanter Abstand der Einkoppelstelle zur zugehörigen Empfangsstelle eingehalten. Dadurch ist das Verfahren besonders praktikabel.

Vorzugsweise wird dabei z.B. ein zum Einkoppeln des Ultraschalls und zum Empfangen der Ultraschallwellen vorhandener Prüfkopf parallel zur Oberfläche bewegt. Zur Bestimmung einer Schweißnahtbreite wird der Prüfkopf beispielsweise senkrecht zur Richtung der Schweißnaht bewegt.

Falls die Einkoppelstelle konstant gehalten wird und lediglich die Empfangsstelle variiert wird, hat dies den Vorteil, daß zur Erhöhung des Meßgenauigkeit nicht nur unterschiedliche Abstände zwischen Einkoppel- und Empfangsstelle, sondern auch unterschiedliche Empfangswinkel beitragen.

Nach einer ganz besonders bevorzugten Ausgestaltung des Verfahrens ist das Bauteil ein Rohr, das aus einem Mutterrohr und einem Sleeve-Rohr zusammengesetzt ist, die einen Ringspalt einschließen, und die durch eine den Ringspalt durchdringende Schweißnaht miteinander verbunden sind.

Da es sich bei dem Verfahren nach der Erfindung um ein reines Laufzeitmeßverfahren handelt, bei dem die Amplituden der Empfangssignale nur mittelbar zur Genauigkeit beitragen, wird das Verfahren nur in geringer weise durch Oberflächendeformationen in einer von der Schweißnaht beeinflußten Oberflächenzone beeinflußt. Bei Anwendung des Verfahrens zum Vermessen einer Schweißnaht ist deshalb eine mechanische Bearbeitung des Prüfbereichs nicht zwingend erforderlich.

Bevorzugt werden zur Prüfung der Schweißnaht Unstetigkeitskanten derart zur Interpretation eines Meßergebnisses, d.h. insbesondere zur Bestimmung des Abstands, herangezogen, daß die erste Unstetigkeitskante jeweils einerseits durch eine Mantelfläche des Ringspalts und andererseits durch eine erste Seitenfläche bzw. eine in Rohrrichtung von der ersten Seitenfläche beabstandete zweite Seitenfläche der Schweißnaht gebildet sind.

Die beiden Unstetigkeitskanten sind also parallel oder nahezu parallel zur Rohroberfläche und über die Schweißnaht hinweg beabstandet. Die Bestimmung des Abstands derartiger Unstetigkeitskanten kann einerseits auch so verstanden werden, daß die Ausdehnung eines Objekts in Richtung des Sleeve-Rohrs ermittelt wird, wobei das vermessene Objekt als Negativbild eines sich parallel zur Oberfläche ausdehnenden Risses oder Spalts verstanden werden kann. Andererseits können die Unstetigkeitskanten auch als Spaltspitzen oder Spaltkanten eines diesseits und eines jenseits der Schweißnaht gelegenen Teilspalts des Ringspalts aufgefaßt werden.

Insbesondere wird aus den Empfangszeitpunkten eine Anbindebreite oder wirksame Schweißnahtbreite der Schweißnaht bestimmt.

Nach einer anderen besonders bevorzugten Ausgestaltung des Verfahrens werden die Einkoppelstelle(n) und/oder die Empfangsstelle(n) außerhalb der von der Schweißnaht beeinflußten Oberflächenzone des Rohrs gewählt.

Die Einkoppelsteile(n) und/oder die Empfangsstelle(n) liegen beispielsweise auf der Innenoberfläche des Sleeve-Rohrs.

Vorzugsweise werden die Einkoppelstelle(n) und die Empfangsstelle(n) in Richtung des Rohrs beabstandet und beiderseits der Schweißnaht gelegen gewählt.

Hierzu wird beispielsweise ein Ultraschallwandler zum Einkoppeln von Ultraschall und ein davon gesonderter Ultraschallempfänger zum Empfang der Ultraschallwellen verwendet.

Die Einkoppelstelle(n) und die Empfangsstelle(n) werden insbesondere in unterschiedlichem Abstand zur Schweißnaht, speziell zur von ihr beeinflußten Oberflächenzone, gewählt, d.h. insbesondere asymmetrisch angeordnet. Dadurch wird die Genauigkeit des Verfahrens in vorteilhafter Weise weiter erhöht. Die Einkoppelstelle(n) und Empfangsstelle(n) sind dann nämlich mit großer Wahrscheinlichkeit asymmetrisch bezüglich der Anbindebreite angeordnet, was die Genauigkeit des Verfahrens - wie oben erläutert - positiv beeinflußt.

Ebenfalls besonders bevorzugt werden die Einkoppelstelle(n) und die Empfangsstelle(n) - bei Betrachtung des Rohrs in einem Längsschnitt - auf der gleichen Seite bezüglich der Schweißnaht gelegen gewählt.

Die Empfangsstelle und die Einkoppelstelle werden beispielsweise im wesentlichen identisch gewählt, d.h. es wird eine in Rückwärtsrichtung gebeugte Ultraschallwelle empfangen. Ein zur Durchführung dieser Verfahrensvariante hergerichteter Ultraschallprüfkopf ist besonders kompakt aufbaubar, insbesondere falls ein zum Einkoppeln verwendeter Ultraschallwandler auch zum Empfang hergerichtet ist.

Die auf einen Ultraschallprüfkopf bezogene Aufgabe wird gemäß der Erfindung in einer ersten Ausführungsform gelöst durch einen Ultraschallprüfkopf mit
a) einem Ultraschallwandler zum Einkoppeln von Ultraschall in das Bauteil,
b) einem Ultraschallsensor zum Empfang einer im Bauteil reflektierten Ultraschallwelle,
c) einem Ultraschallempfänger zum Empfang einer an einer Unstetigkeitskante gebeugten Ultraschallwelle.

Mit einem derartigen Ultraschallprüfkopf ist es in vorteilhafter Weise möglich, in einem einzigen Prüfzyklus das Bauteil mittels des Ultraschallsensors in V-Durchschallung auf Fehler, bei einer Schweißnaht insbesondere auf Bindefehler, zu prüfen und im gleichen Zyklus mittels des Ultraschallempfängers im TOFD-Verfahren eine Abstandsbestimmung, bei einer Schweißnaht insbesondere eine Bestimmung der Anbindebreite, vorzunehmen. Darüber hinaus kann die unter V-Durchschallung gewonnene Hüllkurve in die Bestimmung der Anbindebreite einfließen und somit zu einer Genauigkeitssteigerung beitragen.

Der Ultraschallempfänger und der Ultraschallsensor weisen vorzugsweise einen unterschiedlichen Abstand zum Ultraschallwandler auf, wobei dieser Abstand insbesondere in einer Fahrrichtung des Ultraschallprüfkopfs gemessen ist.

Nach einer bevorzugten Ausgestaltung ist der Ultraschallwandler auch zum Empfang einer in Ruckwärtsrichtung gebeugten Ultraschallwelle hergerichtet.

Die auf einen Ultraschallprüfkopf bezogene Aufgabe wird gemäß der Erfindung in einer zweiten Ausführungsform gelöst durch einen Ultraschallprüfkopf mit
a) einem Ultraschallwandler zum Einkoppeln von Ultraschall in das Bauteil unter einem Einkoppelwinkel von weniger als +/-5° und
b) mindestens zwei Ultraschallempfängern zum Empfang von an einer Unstetigkeitskante im Bauteil gebeugten Ultraschallwellen.

Der Ultraschallwandler ist vorzugsweise für Einkoppelwinkel von weniger als ± 1°, insbesondere für 0°, hergerichtet.

Die beiden Ultraschallempfänger weisen vorzugsweise einen unterschiedlichen Abstand zum Ultraschallwandler auf.

Die Ultraschallprüfköpfe sowohl der ersten als auch der zweiten Ausführungsform werden bevorzugt zur Durchführung des Verfahrens nach der Erfindung verwendet. Mit diesen Ultraschallprüfköpfen ist das Verfahren mit besonders hoher Genauigkeit durchführbar.

Mehrere Ausführungsbeispiele des Verfahrens und der Ultraschallprüfköpfe nach der Erfindung werden anhand der Figuren 1 bis 4 näher erläutert. Es zeigen:
- FIG 1: ein erstes Ausführungsbeispiel des Verfahrens nach der Erfindung mit von der Einkoppelstelle getrennter Empfangsstelle,
- FIG 2: ein zweites Ausführungsbeispiel des Verfahrens nach der Erfindung mit im wesentlichen identischer Einkoppel- und Empfangsstelle,
- FIG 3: ein drittes Ausführungsbeispiel des Verfahrens nach der Erfindung mit einem Ultraschallprüfkopf der ersten Ausführungsform und
- FIG 4: ein viertes Ausführungsbeispiel des Verfahrens nach der Erfindung mit einem Ultraschallprüfkopf der zweiten Ausführungsform.

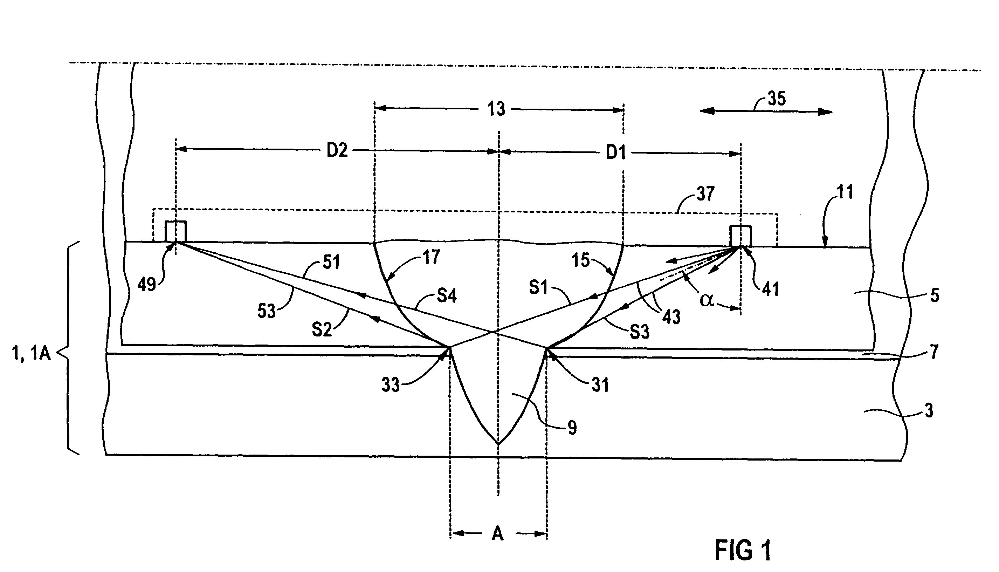

Figur 1 zeigt im Längsschnitt ein als Rohr 1A ausgestaltetes Bauteil 1, das aus einem Mutterrohr 3 und einem in dieses eingesteckten Sleeve-Rohr 5 zusammengesetzt ist. Dargestellt sind jeweils Ausschnitte aus den Rohrwandungen.

Zwischen dem Mutterrohr 3 und dem Sleeve-Rohr 5 ist ein Ringspalt 7 gebildet, der eine Breite von weniger als 1 mm oder weniger als 0,1 mm aufweist. Das Sleeve-Rohr 5 ist über eine Schweißnaht 9 an das Mutterrohr 3 angebunden, die sich in radialer Richtung ausgehend von einer Oberfläche 11, die die Innenmantelfläche des Sleeve-Rohrs 5 ist, über den Ringspalt 7 hinweg bis in das Mutterrohr 3 hinein erstreckt. Bedingt durch die verwendete Schweißtechnik, z.B. des Laserschweißens, ist die Oberfläche 11 in einer Oberflächenzone 13 durch die Schweißnaht 9 beeinflußt und weist dort eine in den Figuren angedeutete Welligkeit oder Rauhigkeit auf.

Die Schweißnaht 9 erstreckt sich ringförmig um den gesamten Innenumfang des Sleeve-Rohrs 5. Die Schweißnaht 9 ist in der Längsschnittsdarstellung der Figuren 1 bis 4 weitgehend symmetrisch bezüglich einer Senkrechten zur Rohrachse.

Eine erste Seitenfläche 15 der Schweißnaht 9 durchdringt den Ringspalt 7. Durch das Zusammentreffen der ersten Seitenfläche 15 mit einer Mantelfläche des Ringspalts 7, beispielsweise mit der Außenmantelfläche des Sleeve-Rohrs 5, ist eine erste Unstetigkeitskante 31 gebildet. In gleicher Weise bildet eine zweite Seitenfläche 17 beim Durchdringen des Ringspalts 7 eine zweite Unstetigkeitskante 33, die von der ersten Unstetigkeitskante 31 in einer zur Oberfläche 11 parallelen Richtung 35 beabstandet ist. Der entsprechende Abstand ist mit A bezeichnet.

Die Unstetigkeit tritt hierbei in Rohrlängsrichtung auf. An den Unstetigkeitskanten 31, 33 ändern sich - bei einer gedachten Bewegung im Ringspalt 7 entlang der Richtung 35 - die akustischen Eigenschaften des Rohrs 1A. Insbesondere springt die akustische Impedanz zwischen den Werten für Luft, mit der der Ringspalt 7 in der Regel gefüllt ist, und dem Wert für Stahl, aus dem das Rohr 1A gefertigt ist. Dies gilt in analoger Weise, wenn der Ringspalt mit Flüssigkeit (wie z.B. Wasser) gefüllt ist.

Die Unstetigkeitskanten 31, 33 bilden jeweils eine Abschattungskante für auftreffenden Ultraschall 43, so daß gemäß dem Huygenschen Prinzip der Elementarwellen von diesen Unstetigkeitskanten 31, 33 gebeugte Ultraschallwellen 51, 53 ausgehen.

Zur Durchführung des Verfahrens nach der Erfindung ist an der Oberfläche 11 ein Prüfkopf 37 angeordnet, der über eine außerhalb der Oberflächenzone 13 gelegene Einkoppelstelle 41 den Ultraschall 43 in das Rohr 1A einkoppelt. An einer bezüglich der Schweißnaht 9 der Einkoppelstelle 41 gegenüber gelegenen Empfangsstelle 49 werden die von der ersten Unstetigkeitskante 31 und der zweiten Unstetigkeitskante 33 empfangene erste Ultraschallwelle 51 bzw. zweite Ultraschallwelle 53 detektiert. Der Abstand D1 der Einkoppelstelle 41 von der Schweißnaht 9 ist ungleich dem Abstand D2 der Empfangsstelle 49 von der Schweißnaht 9 gewählt. Auch die Empfangsstelle 49 liegt außerhalb der genannten Oberflächenzone 13.

Die Summe S1 + S2 aus dem Schallweg S1 von der Einkoppelstelle 41 zur zweiten Unstetigkeitskante 33 und dem Schallweg S2 von der zweiten Unstetigkeitskante 33 zur Empfangsstelle 49 einerseits sowie die Summe S3 + S4 aus dem Schallweg S3 von der Einkoppelstelle 41 zur ersten Unstetigkeitskante 31 und dem Schallweg S4 von der ersten Unstetigkeitskante 31 zur Empfangsstelle 49 andererseits sind bei der in Figur 1 dargestellten, bezüglich der Schweißnaht 9 asymmetrischen Anordnung der Einkoppelstelle 41 und der Empfangsstelle 49 voneinander unterschiedlich. Die von den Unstetigkeitskanten 31, 33 ausgehenden gebeugten Ultraschallwellen 51 bzw. 53 treffen deshalb zu unterschiedlichen Zeitpunkten an der Empfangsstelle 49 ein. Aus der Differenz dieser Empfangszeitpunkte wird unter Anwendung geometrischer Berechnungen und bei bekannter Schallgeschwindigkeit im Rohr 1A der Abstand A der beiden Unstetigkeitskanten 31, 33 bestimmt. Dieser Abstand A repräsentiert eine Anbindebreite A, mit der das Mutterrohr 3 an das Sleeve-Rohr 5 angebunden ist.

Zur Berechnung kann bei feststehendem Prüfkopf 37 das aus den Laufzeiten gewonnene Meßergebnis so interpretiert werden, daß die erste Unstetigkeitskante 31 auf einer Ellipse mit einer Radiensumme entsprechend der Laufzeitsumme S3 + S4 liegt. Die Mittelpunkte dieser Ellipse sind mit der Einkoppelstelle 41 und der Empfangsstelle 49 identisch. In gleicher Weise liegt die zweite Unstetigkeitskante 33 auf einer Ellipse mit einer Radiensumme S2 + S1.

Zur Erhöhung der Meßgenauigkeit wird der Prüfkopf 37 in Richtung 35 verfahren oder hin und her bewegt und die beschriebene Messung nacheinander an unterschiedlichen Orten durchgeführt. Um die Schweißnaht 9 in ihrer gesamten Umfangsausdehnung zu untersuchen, wird der Prüfkopf 37 entlang einer Umfangslinie bewegt (nicht dargestellt).

Die Oberfläche 11 und/oder der Ringspalt 7 können auch eine konische Form aufweisen, beispielsweise an einer Rohrverjüngung (nicht dargestellt). Der Ringspalt 7 könnte - in der Längsschnittdarstellung der Figur 1 - auch schräg bezüglich der Oberfläche 11 verlaufen (nicht gezeichnet).

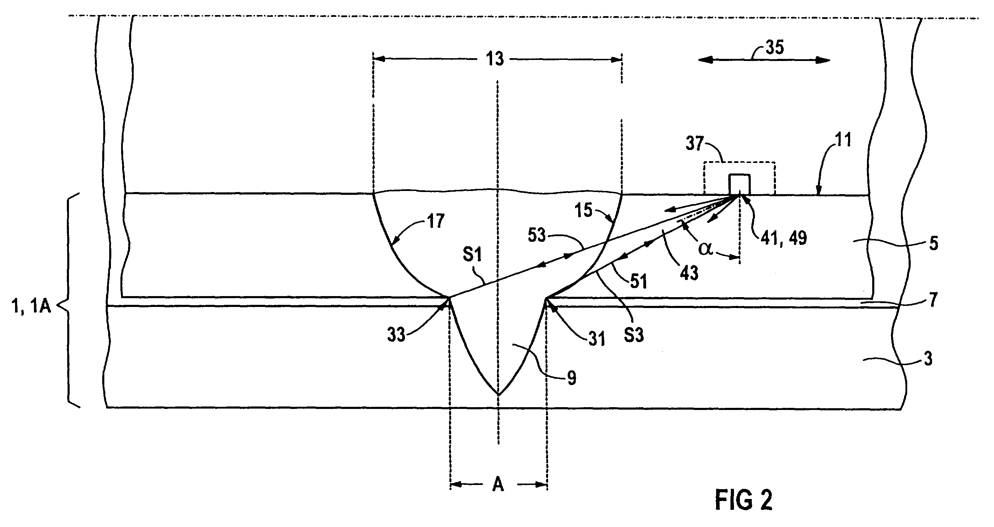

Bei dem in Figur 2 dargestellten zweiten Ausführungsbeispiel des Verfahrens nach der Erfindung sind die Einkoppelstelle 41 und die Empfangsstelle 49 im Gegensatz zu dem in Figur 1 dargestellten Ausführungsbeispiel auf der gleichen Seite bezüglich der Schweißnaht 9 gelegen gewählt. Im Prüfkopf 37 wird zum Einkoppeln des Ultraschalls 43 und zum Empfang der ersten Ultraschallwelle 51 und der zweiten Ultraschallwelle 53 ein und derselbe Ultraschallwandler verwendet, so daß die Einkoppelstelle 41 und die Empfangsstelle 49 weitgehend identisch sind.

Ein in dieser Situation aufgenommenes Meßergebnis kann bei der Auswertung so interpretiert werden, daß die erste Unstetigkeitskante 31 auf einem Kreis um die Einkoppelstelle 41 mit Radius S3 gelegen ist, der dem Schallweg von der Einkoppelstelle 41 zur ersten Unstetigkeitskante 31 entspricht. Die zweite Unstetigkeitskante 33 liegt dann auf einem hierzu konzentrischen Kreis mit einem Radius, der dem Schallweg von der Einkoppelstelle 41 zur zweiten Unstetigkeitskante 33 entspricht. Durch Anwendung an sich bekannter geometrischer Überlegungen ist auch in dieser Prüfsituation die Anbindebreite A der Schweißnaht 9 bestimmbar.

Der Einkoppelwinkel α weist einen Wert zwischen 60° und 75° auf.

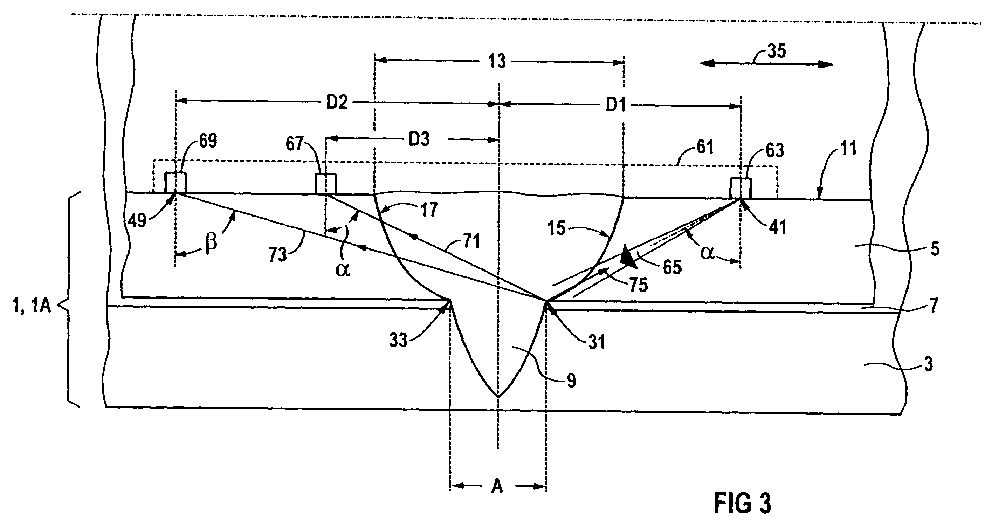

Figur 3 zeigt zunächst einen Ultraschallprüfkopf 61 in der ersten Ausführungsform nach der Erfindung. Der Ultraschallprüfkopf 61 umfaßt einen Ultraschallwandler 63 zum Einkoppeln von Ultraschall 65 in das Rohr 1A. Der Ultraschallprüfkopf 61 umfaßt ferner einen Ultraschallsensor 67 zum Empfang einer im Rohr 1A, insbesondere am Ringspalt 7 oder an einem (nicht gezeichneten) Riß in der Schweißnaht 9, reflektierten Ultraschallwelle 71. Der Ultraschallwandler 63 arbeitet zusammen mit dem Ultraschallsensor 67 im V-Durchschallungsmodus.

Weiterhin weist der Ultraschallprüfkopf 61 einen Ultraschallempfänger 69 zum Empfang der von den Unstetigkeitskanten 31, 33 ausgehenden, durch Beugung entstandenen und zylinderförmigen Ultraschallwellen 73 (in Figur 3 nur dargestellt für die erste Unstetigkeitskante 31).

Der Abstand D1 + D3 des Ultraschallsensors 67 vom Ultraschallwandler 63 ist in Abhängigkeit von der Wandstärke des Sleeve-Rohrs 5 derart gewählt, daß der eingekoppelte Ultraschall 65 nach Reflexion an einer Mantelfläche des Ringspalts 7 zum Ultraschallsensor 67 gelangt. Der Abstand D2 + D1 des Ultraschallempfängers 69 vom Ultraschallwandler 63 ist größer als dieser Abstand D1 + D3 gewählt, so daß die reflektierte Ultraschallwelle 71 nicht zum Ultraschallempfänger 69 gelangt und der Letztgenannte allein und deshalb mit großer Genauigkeit die gebeugte Ultraschallwelle 73 empfängt.

Ein am Ultraschallwandler 63 eingestellter Einkoppelwinkel α sowie ein am Ultraschallempfänger 69 eingestellter Empfangswinkel β sind derart groß gewählt, daß selbst bei einem Hin- und Herbewegen des Ultraschallprüfkopfs 61 entlang der Richtung 35 weder der Ultraschallwandler 63 noch der Ultraschallempfänger 69 in die Oberflächenzone 13 der Schweißnaht 9 hineinfahren. Vorzugsweise liegt der Einkoppelwinkel α im Intervall von 65° bis 70°, und der Empfangswinkel β liegt zwischen 75° und 80°.

Bei dem in Figur 3 gleichfalls gezeichneten dritten Ausführungsbeispiel des Verfahrens nach der Erfindung wird der eingekoppelte Ultraschall 65 sowohl auf der dem Ultraschallwandler 63 bezüglich der Schweißnaht 9 gegenüberliegenden Seite - vom Ultraschallempfänger 69 als gebeugte Ultraschallwelle 73 - als auch auf der bezüglich der Schweißnaht 9 gleichen Seite empfangen. Hierzu ist der Ultraschallwandler 63 auch zum Empfang einer in Rückwärtsrichtung gebeugten Ultraschallwelle 75 hergerichtet. Der Ultraschallwandler 63 arbeitet hierbei im Impuls-Echo-Modus.

Die in Rückwärtsrichtung gebeugte Ultraschallwelle 75 ist zusammen mit der - in Vorwärtsrichtung - gebeugten Ultraschallwelle 73 Teil einer von der ersten Unstetigkeitskante 31 durch Beugung abgestrahlten, gemeinsamen und in etwa zylinderartigen Welle.

Der Ultraschall 65 wird fokussiert eingekoppelt.

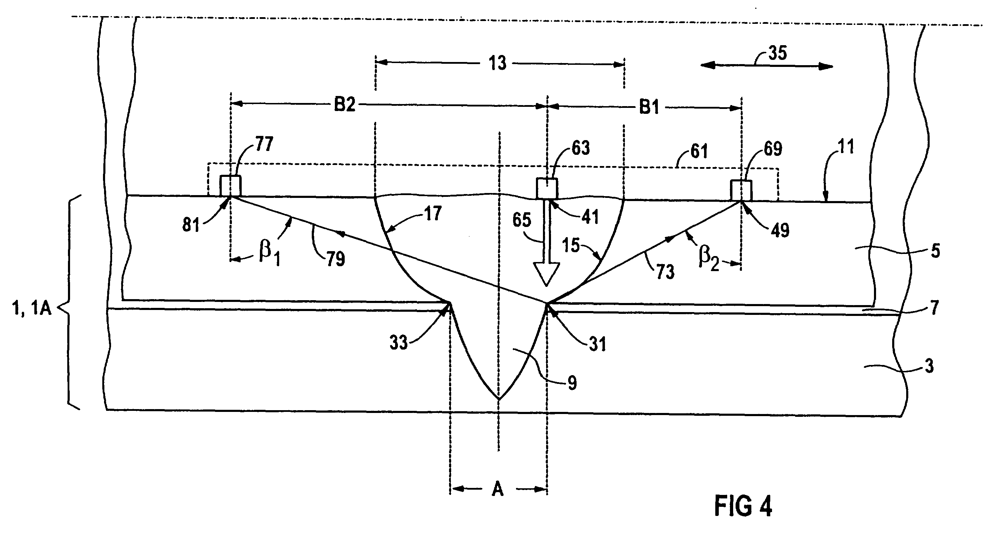

Figur 4 zeigt zunächst einen Ultraschallprüfkopf 61 der zweiten Ausführungsform nach der Erfindung. Dieser weist, wie der in Figur 3 dargestellte Ultraschallprüfkopf 61, einen Ultraschallwandler 63 zum Einkoppeln von Ultraschall 65 in das Rohr 1A auf. Der Ultraschallwandler 63 des in Figur 4 dargestellten Ultraschallprüfkopfs 61 koppelt Ultraschall aber im wesentlichen senkrecht (Einkoppelwinkel α = 0) zur Oberfläche 11 des Sleeve-Rohrs 5 ein. Der eingekoppelte Ultraschall wird nicht fokussiert.

Der Ultraschallprüfkopf 61 der Figur 4 unterscheidet sich von dem der Figur 3 auch darin, daß neben dem Ultraschallempfänger 69 ein weiterer Ultraschallempfänger 77 zum Empfang der von den Unstetigkeitskanten 31, 33 gebeugten Ultraschallwellen 73, 79 vorhanden ist. Die beiden Ultraschallempfänger 69, 77 sind auf unterschiedlichen Seiten des Ultraschallwandlers 63 angeordnet und weisen bezüglich des Ultraschallwandlers 63 einen unterschiedlichen Abstand B1 bzw. B2 auf. Entsprechend sind die Empfangswinkel β₁, β₂ unterschiedlich und betragen in etwa 75° bzw. 65°.

Figur 4 erläutert ferner ein viertes Ausführungsbeispiel des Verfahrens nach der Erfindung, bei dem nach Einkopplung von Ultraschall 65 an einer Einkoppelstelle 41 an zwei außerhalb der Oberflächenzone 13 gelegenen Empfangsstellen 49, 81 durch Beugung an den Unstetigkeitskanten 31, 33 entstandene Ultraschallwellen detektiert werden (in Figur 4 nur gezeichnet für eine der Unstetigkeitskanten 31).

Zur Erhöhung der Genauigkeit können neben den dargestellten Ultraschallempfängern 69, 77 weitere, bevorzugt in anderen Abständen zum Ultraschallwandler 63 angeordnete, Ultraschallempfänger vorhanden sein, die nicht explizit gezeichnet sind. Die Genauigkeit des Verfahrens nach der Erfindung wird nämlich um so mehr erhöht, je mehr unterschiedliche Einkoppelwinkel α und/oder Empfangswinkel β₁, β₂ zur Auswertung beitragen.

## Patentansprüche

1. Verfahren zum Bestimmen des Abstands (A) einer ersten Unstetigkeitskante (31) in einem Bauteil (1), insbesondere einer ersten Hohlraumkante, von einer zweiten Unstetigkeitskante (33) im Bauteil (1), insbesondere von einer zweiten Hohlraumkante, wobei der Abstand (A) in einer zu einer Oberfläche (11) des Bauteils (1) parallelen oder nahezu parallelen Richtung (35) unter Verwendung von Ultraschall gemessen wird,
**dadurch gekennzeichnet**,
- daß die Unstetigkeitskanten (31, 33) mit Ultraschall (43) beschallt werden, der an einer Einkoppelstelle (41) durch die Oberfläche (11) des Bauteils (1) eingekoppelt wird,
- daß eine erste Ultraschallwelle (51) und eine zweite Ultraschallwelle (53), die durch Beugung an der ersten Unstetigkeitskante (31) bzw. an der zweiten Unstetigkeitskante (33) von dem eingekoppelten Ultraschall (43) angeregt sind, an einer Empfangsstelle (49) empfangen werden, und
- daß die gemessenen Empfangszeitpunkte zur Bestimmung des Abstands (A) der Unstetigkeitskanten (31, 33) verwendet werden.

2. Verfahren nach Anspruch 1,
**dadurch gekennzeichnet**, daß der Ultraschall (43) nacheinander an unterschiedlichen Einkoppelstellen (41) durch die Oberfläche (11) eingekoppelt wird und/oder die erste Ultraschallwelle (51) sowie die zweite Ultraschallwelle (53) nacheinander an unterschiedlichen Empfangsstellen (49) empfangen werden, und daß die bezüglich unterschiedlicher Einkoppelstellen (41) bzw. Empfangsstellen (49) gemessenen Empfangszeitpunkte zur Bestimmung des Abstands (A) der Unstetigkeitskanten (31, 33) verwendet werden.

3. Verfahren nach Anspruch 2,
**dadurch gekennzeichnet**, daß ein zum Einkoppeln des Ultraschalls (43) und zum Empfangen der Ultraschallwellen (51, 53) vorhandener Prüfkopf (37) parallel zur Oberfläche (11) bewegt wird.

4. Verfahren nach Anspruch 2 oder 3,
**dadurch gekennzeichnet**, daß die bezüglich unterschiedlicher Einkoppelstellen (41) bzw. Empfangsstellen (49) gemessenen Empfangszeitpunkte zur Bestimmung des Abstands (A) der Unstetigkeitskanten (31, 33) statistisch ausgewertet werden.

5. Verfahren nach einem der Ansprüche 1 bis 4,
**dadurch gekennzeichnet**, daß das Bauteil (1) ein Rohr (1A) ist, das aus einem Mutterrohr (3) und einem Sleeve-Rohr (5) zusammengesetzt ist, die einen Ringspalt (7) einschließen und die durch eine den Ringspalt (7) durchdringende Schweißnaht (9) miteinander verbunden sind.

6. Verfahren nach Anspruch 5,
**dadurch gekennzeichnet**, daß die erste Unstetigkeitskante (31) und die zweite Unstetigkeitskante (33) jeweils einerseits durch eine Mantelfläche des Ringspalts (7) und andererseits durch eine erste Seitenfläche (15) bzw. eine in Rohrrichtung von der ersten Seitenfläche (15) beabstandete zweite Seitenfläche (17) der Schweißnaht (9) gebildet sind.

7. Verfahren nach Anspruch 5 oder 6,
**dadurch gekennzeichnet**, daß aus den Empfangszeitpunkten eine Anbindebreite (A) der Schweißnaht (9) bestimmt wird.

8. Verfahren nach einem der Ansprüche 5 bis 7,
**dadurch gekennzeichnet**, daß die Einkoppelstelle(n) (41) und/oder die Empfangsstelle(n) (49) außerhalb einer von der Schweißnaht (9) beeinflußten Oberflächenzone (13) des Rohrs (1A) gewählt werden.

9. Verfahren nach einem der Ansprüche 5 bis 8,
**dadurch gekennzeichnet**, daß die Einkoppelstelle(n) (41) und die Empfangsstelle(n) (49) in Richtung des Rohrs (1A) beabstandet und beiderseits der Schweißnaht (9) gelegen gewählt werden. (Figur 1)

10. Verfahren nach Anspruch 9,
**dadurch gekennzeichnet**, daß die Einkoppelstelle(n) (41) und die Empfangsstelle(n) (49) in unterschiedlichem Abstand (D1 bzw. D2) zur Schweißnaht (9) gewählt werden. (Figur 1)

11. Verfahren nach einem der Ansprüche 5 bis 8,
**dadurch gekennzeichnet**, daß bei Betrachtung des Rohrs (1A) in einem Längsschnitt die Einkoppelstelle(n) (41) und die Empfangsstelle(n) (49) auf der gleichen Seite bezüglich der Schweißnaht (9) gelegen gewählt werden. (Figur 2)

12. Ultraschallprüfkopf (61) zum Prüfen eines Bauteils (1), das insbesondere eine Schweißnaht (9) aufweist, mit
a) einem Ultraschallwandler (63) zum Einkoppeln von Ultraschall (65) in das Bauteil (1),
b) einem Ultraschallsensor (67) zum Empfang einer im Bauteil (1) reflektierten Ultraschallwelle (71) und
c) einem Ultraschallempfänger (69) zum Empfang einer an einer Unstetigkeitskante (31, 33) gebeugten Ultraschallwelle (73) (Figur 3).

13. Ultraschallprüfkopf (61) nach Anspruch 12,
**dadurch gekennzeichnet**, daß der Ultraschallempfänger (69) und der Ultraschallsensor (67) einen unterschiedlichen Abstand (D1+D2 bzw. D1+D3) zum Ultraschallwandler (63) aufweisen.

14. Ultraschallprüfkopf (61) nach Anspruch 12 oder 13,
**dadurch gekennzeichnet**, daß der Ultraschallwandler (63) auch zum Empfang einer in Rückwärtsrichtung gebeugten Ultraschallwelle (75) hergerichtet ist.

15. Ultraschallprüfkopf (61) zum Prüfen eines Bauteils (1), das insbesondere eine Schweißnaht (9) aufweist, mit
a) einem Ultraschallwandler (63) zum Einkoppeln von Ultraschall (65) in das Bauteil (1) unter einem Einkoppelwinkel (α) von weniger als +/-5° und
b) mindestens zwei Ultraschallempfängern (69, 77) zum Empfang von an einer Unstetigkeitskante (31, 33) im Bauteil (1) gebeugten Ultraschallwellen (73 bzw. 79). (Figur 4)

16. Ultraschallprüfkopf (61) nach Anspruch 15,
**dadurch gekennzeichnet**, daß die Ultraschallempfänger (69, 77) einen unterschiedlichen Abstand (B1 bzw. B2) zum Ultraschallwandler (63) aufweisen.
